# EUROPEAN PATENT SPECIFICATION

(11) **EP 3 819 478 B1**
(45) Date of publication and mention of the grant of the patent: **20.09.2023**
(21) Application number: 20206295.6
(22) Date of filing: 06.11.2020
(51) Int. Cl.: F01D 25/16, F02C 7/32

(54) **TOWERSHAFT BEARING MOUNT FOR INTERMEDIATE CASE**
TURMWELLENLAGERHALTERUNG FÜR ZWISCHENGEHÄUSE
SUPPORT DE PALIER D'ARBRE DE TRANSMISSION POUR BOÎTIER INTERMÉDIAIRE

(30) Priority: 08.11.2019 US 201916678268
(43) Date of publication of application: 12.05.2021
(73) Proprietor: Raytheon Technologies Corporation, Farmington, CT 06032 (US)
(72) Inventor: ANGLIN, Christopher T., Manchester, CT 06040 (US)
(74) Representative: Dehns

(56) References cited:
- EP-A1- 1 911 938
- US-A- 2 932 443
- US-A- 4 566 269
- US-A1- 2017 044 987
- US-B2- 9 863 325

## Description

### BACKGROUND

The present disclosure relates to a transmission system and more particularly, to a support mount for meshing gears in a bearing compartment of a transmission system.

A gas turbine engine typically includes a transmission system for coupling one of its spools to an accessory gearbox. Such a transmission system includes a first bevel gear (often called the bull gear) mounted to a shaft of the spool. The transmission system also includes a tower shaft and an associated second bevel gear (often referred to as the bevel gear) mounted to a first end of the tower shaft, where a second end of the tower shaft is coupled to the accessory gearbox.

With existing aircraft bull/bevel gear assemblies, the gears tend to push away from each other due to the gear tooth geometry, which can cause excessive wear on the gear teeth or even decoupling of the gears.

US 4 566 269 A discloses a removable support assembly for a jet engine.

US 9 863 325 B2 discloses an assembly for an aircraft turbine engine and a method for mounting said assembly.

### SUMMARY

In accordance with a first aspect of the present disclosure, a bearing compartment assembly for a gas turbine engine is provided in accordance with claim 1.

In accordance with a second aspect of the present disclosure, a method of supporting a towershaft assembly of an engine of an aircraft against an intermediate case of the aircraft is provided in accordance with claim 7.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is a side partial cross-section view of a turbine engine.
FIG. 2 is a perspective view of an intermediate case and a support mount.
FIG. 3 is an isolation view of the support mount and gear wheel.
FIG. 4A is a perspective view of a support mount with a truss pattern.
FIG. 4B is a perspective view of a support mount with two panels, not falling under the claimed subject matter.

While the above-identified figures set forth one or more embodiments of the present disclosure, other embodiments are also contemplated, as noted in the discussion. In all cases, this disclosure presents embodiments by way of representation and not limitation. It should be understood that numerous other modifications and embodiments can be devised by those skilled in the art, which fall within the scope of the principles of the disclosure. The figures may not be drawn to scale, and applications and embodiments of the present disclosure may include features and components not specifically shown in the drawings.

### DETAILED DESCRIPTION

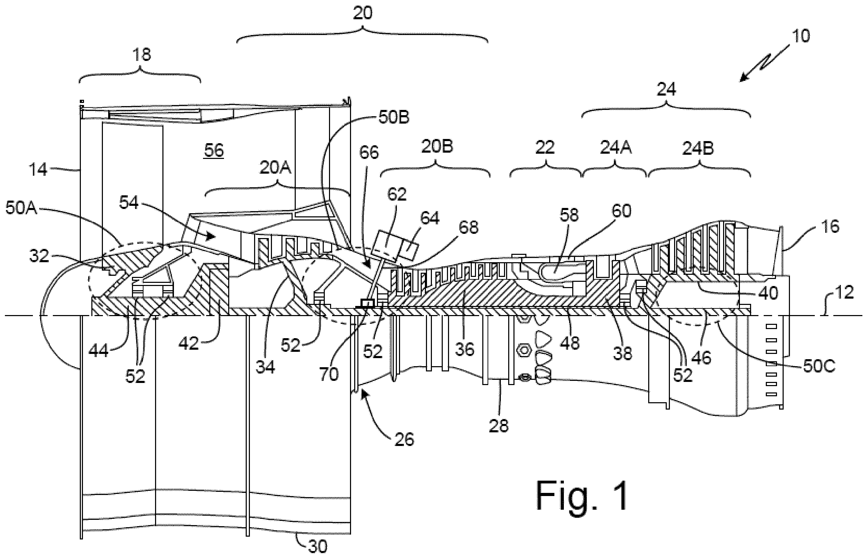

FIG. 1 shows a side elevation cutaway view of gas turbine engine 10 and includes axial centerline 12, upstream airflow inlet 14, downstream airflow exhaust 16, fan section 18, compressor section 20 (with low pressure compressor ("LPC") section 20A and high pressure compressor ("HPC") section 20B), combustor section 22, turbine section 24 (with high pressure turbine ("HPT") section 24A and low pressure turbine ("LPT") section 24B), engine housing 26 (with inner case 28 (e.g., a core case) and outer case 30 (e.g., a fan case)), fan rotor 32, LPC rotor 34, HPC rotor 36, HPT rotor 38, LPT rotor 40, gear train 42, fan shaft 44, low speed shaft 46, high speed shaft 48, bearing compartments 50A, 50B, and 50C, plurality of bearings 52, core gas path 54, bypass gas path 56, combustion chamber 58, combustor 60, accessory gearbox 62, gearbox attachments 64, transmission system 66, tower shaft 68, and geared system 70.

Gas turbine engine 10 extends along axial centerline 12 between upstream airflow inlet 14 and downstream airflow exhaust 16. Gas turbine engine 10 includes fan section 18, compressor section 20, combustor section 22, and turbine section 24. Compressor section 20 includes LPC section 20A and HPC section 20B. Turbine section 24 includes HPT section 24A and LPT section 24B.

Fan section 18, compressor section 20, combustor section 22, and turbine section 24 are arranged sequentially along centerline 12 within engine housing 26. Engine housing 26 includes inner case 28 (e.g., a core case) and outer case 30 (e.g., a fan case). Inner case 28 may house one or more of fan section 18, compressor 20, combustor section 22, and turbine section 24 (e.g., an engine core). Outer case 30 may house at least fan section 18. Each of gas turbine engine sections 18, 20A, 20B, 24A and 24B includes respective rotors 32-40. Each of these rotors 32-40 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

Fan rotor 32 is connected to gear train 42, for example through fan shaft 44. Gear train 42 and LPC rotor 34 are connected to and driven by LPT rotor 40 through low speed shaft 46. The combination of at least LPC rotor 34, LPT rotor 40, and low speed shaft 46 may be referred to as "a low speed spool." HPC rotor 36 is connected to and driven by HPT rotor 38 through high speed shaft 48. The combination of at least HPC rotor 36, HPT rotor 38, and high speed shaft 48 may be referred to as "a high speed spool." Shafts 44-48 are rotatably supported by a plurality of bearings 52, which can be rolling element bearings, thrust bearings, or other types of bearings. Each of these bearings 52 is connected to engine housing 26 by at least one stationary structure such as, for example, an annular support strut.

During operation, air enters gas turbine engine 10 through airflow inlet 14. Air is directed through fan section 18 and is then split into either core gas path 54 or bypass gas path 56. Core gas path 54 flows sequentially through fan section 18, compressor section 20, combustor section 22, and turbine section 24. The air within core gas path 54 may be referred to as "core air." Bypass gas path 56 flows through a duct between inner case 28 and outer case 30. The air within bypass gas path 56 may be referred to as "bypass air."

The core air is compressed by LPC rotor 34 and HPC rotor 36 and directed into combustion chamber 58 of combustor 60 in combustor section 22. Fuel is injected into combustion chamber 58 and mixed with the core air that has been compressed by compressor section 20 to provide a fuel-air mixture. This fuel-air mixture is ignited and combustion products thereof expand and flow through and sequentially cause HPT rotor 38 and LPT rotor 40 to rotate. The rotations of HPT rotor 38 and LPT rotor 40 drive rotation of LPC rotor 34 and HPC rotor 36, respectively and compression of the air received from core gas path 54. The rotation of LPT rotor 40 also drives rotation of fan rotor 32, which propels bypass air through and out of bypass gas path 56. The propulsion of the bypass air may account for a majority of thrust generated by gas turbine engine 10, which can be more than 75% of engine thrust. Gas turbine engine 10 of the present disclosure, however, is not limited to the foregoing exemplary thrust ratio.

Gas turbine engine 10 of FIG. 1 also includes accessory gearbox 62, one or more gearbox attachments 64 and transmission system 66 in a mid-bearing compartment between LPC section 20A and HPC section 20B. Accessory gearbox 62 is mounted to inner case 28. However, in alternative embodiments, accessory gearbox 62 may be mounted elsewhere with gas turbine engine 10, such as to outer case 30. Accessory gearbox 62 is configured to transfer rotational energy (e.g., torque) between transmission system 66 and the one or more gearbox attachments 64. An example of an accessory gearbox is disclosed in U.S. Patent No. 9,068,515 to Duong et al., which is assigned to the assignee of the present application. Examples of a gearbox attachment may include an air turbine starter, a de-oiler, a hydraulic pump, an oil pump, an integrated drive generator, a permanent magnet alternator and a fuel pump module. The present disclosure is not limited to including the foregoing exemplary types or configurations of accessory gearbox 62 or gearbox attachments 64.

Transmission system 66 is configured to mechanically couple and thereby transfer rotational energy (e.g., torque) between a rotating assembly (or component) of gas turbine engine 10 and accessory gearbox 62. In particular, transmission system 66 of FIG. 1 mechanically couples one of the low speed spool or high speed spool of gas turbine engine 10 to the accessory gearbox 62. Transmission system 66 includes low speed shaft 46 (typically) , high speed shaft 48 (alternatively), tower shaft 68, and geared system 70.

In existing gas turbine engines, it is common to extract power from a main shaft though a bull gear (mounted on the main shaft) into a bevel gear (mounted on the towershaft) and into the accessory gearbox. The bevel gear/towershaft can be mounted on a bearing in one of the bearing compartments that is supported by a towershaft support or a crossover housing that connects between a #2 bearing support and a #3 bearing support.

As power is extracted, the gears tend to push away from each other, due to the gear tooth geometry. To prevent excessive wear on the gear teeth or decoupling of the gears, the bevel gear and its bearing are held rigidly (against deflection) in place by its support. As power extraction through the towershaft increases, the force pushing the gears away from one another also increases. According to such designs, the towershaft support or crossover housing reacts against these deflections. As the magnitude of power extraction is increased, gear loads are consequently increased.

In some existing bearing compartment designs, utilizing a crossover housing can be impractical due to order of assembly challenges, the potential for oil leak paths, or the weight of the crossover housing itself. A towershaft support can to be more flexible than a crossover housing, increasing the potential for wear on gear teeth or for decoupling of the gears.

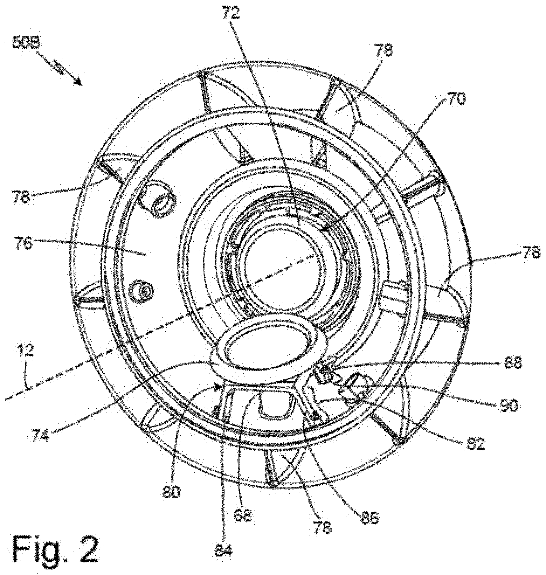

FIG. 2 is a perspective view of inside bearing compartment 50B and shows towershaft 68, geared system 70 (with bull gear 72 and bevel gear 74), intermediate case 76, struts 78, and support mount 80 with first extension 82 (including first leg 84 and second leg 86) and second extension 88 (including third leg 90).

Bull gear 72 and bevel gear 74 are meshed gears. Intermediate case 76 is a wall element of bearing compartment 50B and is made of solid material (e.g., metal). In this example, intermediate case 76 includes a plurality of co-axial frusto-conical sheet portions. Struts 78 are hollow support structures. Support mount 80 is a support structure and includes first and second extensions 82 and 88. In one non-limiting embodiment, support mount 80 can be manufactured by machining or created by additive manufacturing. A material of support mount 80 can include steel, titanium, or nickel. First extension 82 and second extension 88 are extensions of solid material. First leg 84, second leg 86, and third leg 90 are elongate portions of support mount 80. Although not shown in FIG. 2, second extension also includes a fourth leg similar to third leg 90 shown in FIG. 2.

In this example, towershaft 68 passes through one of struts 78 and through support mount 80. In this non-limiting embodiment, bull gear 72 can be attached or mounted to low speed shaft 46 or to high speed shaft 48. Bevel gear 74 is attached to an end of towershaft 68. Bevel gear 74 is meshed with bull gear 72 such that the gear teeth of each are meshed with each other. Intermediate case 76 is mounted inside of bearing compartment 50B. Struts 78 extend between and connect to the frusto-conical portions of intermediate case 76.

Support mount 80 is disposed between intermediate case 76 and bevel gear 74. First leg 84 and second leg 86 of first extension 82 are connected to intermediate case 76 at a first location on intermediate case 76. First leg 84 and second leg 86 of first extension 82 are connected to intermediate case 76 with a fastener. In one example, intermediate case 76 can include fastening features such as bosses for receiving a fastener at each point where first leg 84, second leg 86, third leg 90, and the fourth leg come into contact with intermediate case 76. Third leg 90 and the fourth leg of second extension 88 are connected to intermediate case 76 at a second location on intermediate case 76. In this example, the first location of intermediate case 76 is located radially outward from the second location relative to axial centerline 12. Also in this example, the first location of intermediate case 76 is disposed further away from bull gear 72 than the second location of intermediate case 76.

In this non-limiting embodiment, distal ends of each of first and second legs 84 and 86 are shown as disposed approximately at a midpoint location (in a circumferential direction) between adjacent struts 78. In another non-limiting embodiment, the distal ends of first leg 84, second leg 86, third leg 90, and the fourth leg can be circumferentially (or radially) aligned with a strut 78 or struts 78.

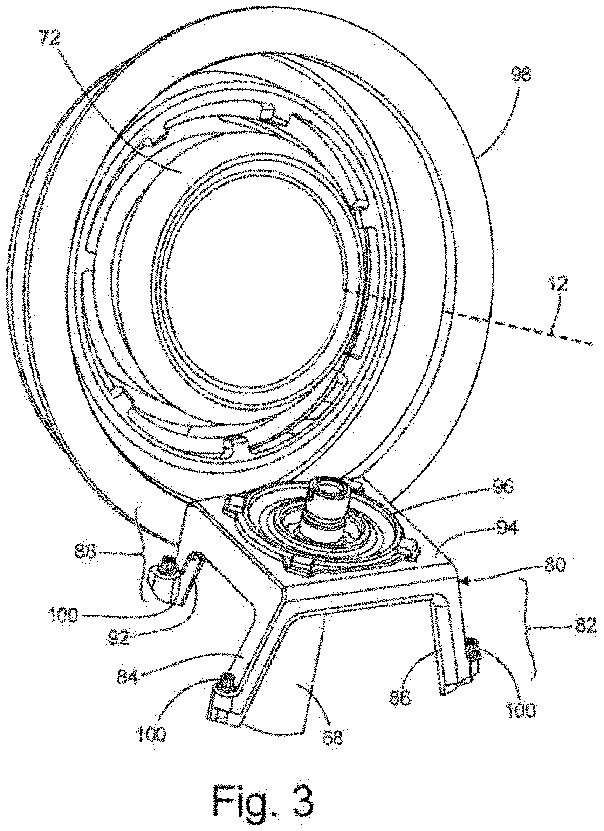

Bull gear 72 and bevel gear 74 rotate and drive each other so as to transfer torque between towershaft 68 and high speed shaft 48. During operation of gas turbine engine 10, for example during high load events, bull gear 72 and bevel gear 74 can push apart from each other causing a load (e.g., force) to be placed on bevel gear 74. This load is transferred from bevel gear 74 to towershaft 68. Struts 78 provide structural support between the frusto-conical pieces of intermediate case 76. Struts 78 also transfer the load from intermediate case 76 out to an airframe of gas turbine engine 10. Support mount 80 provides structural support to towershaft 68 (e.g., via a bearing, see e.g., FIG. 3) and transfers the load from towershaft 68 to intermediate case 76 via first extension 82 and second extension 88. First leg 84 and second leg 86 of first extension 82 and third leg 90 and the fourth leg of second extension 88 transfer the load received by support mount 80 to intermediate case 76.

With intermediate case 76 being a structural element of gas turbine engine 10, struts 78 provide a good load path for transferring loads out of bearing compartment 50B to the airframe of gas turbine engine 10. By mounting the bearing of towershaft 68 (see e.g., FIG. 3 and description thereof) directly to intermediate case 76 via support mount 80, the loads generated by geared system 70 are passed directly into the intermediate case 76. This configuration loads support mount 80 compressively, rather than in bending, as in how an existing towershaft support would be loaded.

Support mount 80 provides a weight reduction over existing types of supports used to absorb load from geared system 70. Support mount 80 improves the assembly process over existing configurations by requiring less assembly steps and because support mount 80 has tight/snap fits to adjacent components through which to pass the loads. Support mount 80 enables increased power extraction capability within existing envelopes. Support mount 80 eliminates flange separation concerns at a flange between support mount 80 and the adjacent hardware. Support mount 80 also provides the benefit of replacing an existing support feature that includes investment cast titanium and receives hot isostatic pressing, thereby simplifying the production and assembly process of gas turbine engine 10.

FIG. 3 is an isolation view of support mount 80 (shown without bevel gear 74 for clarity) and shows axial centerline 12, towershaft 68, bull gear 72, support mount 80, first extension 82, first leg 84, second leg 86, second extension 88, fourth leg 92, body plate 94, towershaft bearing 96, centering spring 98, and fasteners 100.

Fourth leg 92 is a support leg similar to third leg 90. Body plate 94 is a planar piece of solid material with an opening in its middle. Towershaft bearing 96 is a bearing such as a ball bearing or a roller bearing. Centering spring 98 is an annular support element. Fasteners 100 are mechanical fasteners such as bolts. Fourth leg 92 is connected to and extends away from body plate 94. The first, second, third, and fourth legs 84, 86, 90, and 92 intersect with a surface of intermediate case 76 such that first, second, third, and fourth legs 84, 86, 90, and 92 are normal (e.g., are perpendicular, orthogonal) to the surface of intermediate case 76. In one non-limiting embodiment, body plate 94 is perpendicular to a central axis of towershaft 68.

Towershaft bearing 96 is set into and mounted to the opening of body plate 94. The inner diameter of towershaft bearing 96 is engaged with an outer surface of towershaft 68. Centering spring 98 is mounted within bearing compartment 50B (shown in FIGS. 1 and 2) and surrounds axial centerline 12. Fasteners 100 are disposed in and pass through openings in the distal ends of first leg 84, second leg 86, third leg 90, and fourth leg 92. A portion of each fastener 100 engages with intermediate case 76, such as with a mounting feature (e.g., boss) located on intermediate case 76.

Along with first leg 84, second leg 86, and third leg 90, fourth leg 92 attaches to intermediate case 76 so as to brace support mount 80 against intermediate case 76. Fourth leg 92 helps to form the load path from towershaft bearing 96 through to intermediate case 76 and out of bearing compartment 50B through struts 78. Body plate 94 braces towershaft bearing 96 such that body plate 94 receives load from towershaft bearing 96 and transfers that load to first, second, third, and fourth legs 84, 86, 90, and 92. First, second, third, and fourth legs 84, 86, 90, and 92 in turn transfer the load from body plate 94 to intermediate case 76. Towershaft bearing 96 enables towershaft 68 to rotate relative body plate 94 of support mount 80. Fasteners 100 engage with intermediate case 76 so as to attach distal ends of first, second, third, and fourth legs 84, 86, 90, and 92 to a surface of intermediate case 76.

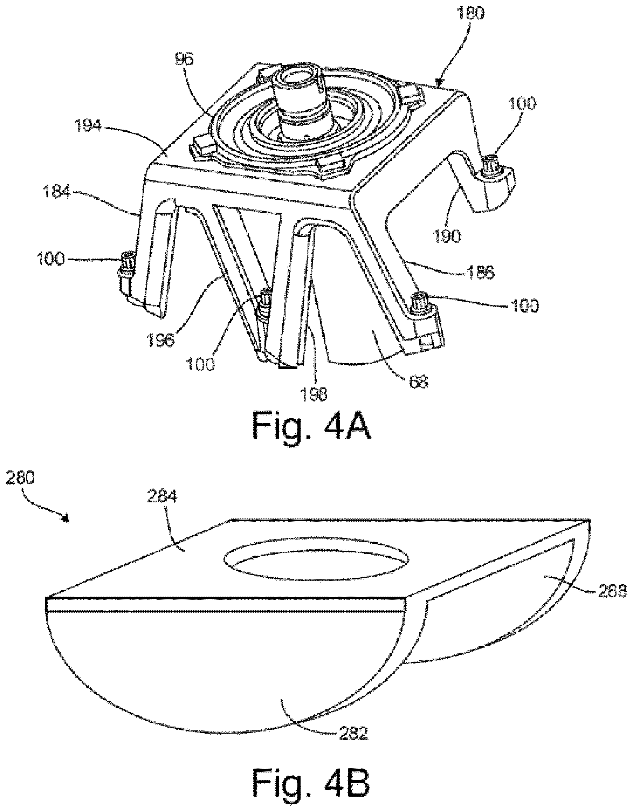

FIG. 4A is a perspective view of a support mount with a truss pattern, and shows towershaft 68, towershaft bearing 96, fasteners 100, and support mount 180 (with first leg 184, second leg 186, third leg 190, body plate 194, fifth leg 196, and sixth leg 198).

Support mount 180 is a support structure with six legs. Fifth leg 196 and sixth leg 198 are elongate pieces of solid material. Fifth leg 196 and sixth leg 198 are connected to and extend from body plate 194. Distal ends of fifth leg 196 and sixth leg 198 are fastened to intermediate case 76 (shown in FIG. 2) via fasteners 100. In this non-limiting embodiment, the distal ends of any or all of first leg 184, second leg 186, third leg 190, fifth leg 196, and sixth leg 198 can be attached to intermediate case at a circumferential location of one of struts 78 (see e.g., FIG. 2).

Fifth leg 196 and sixth leg 198 provide additional paths for the load from towershaft 68 to be transferred from support mount 180 to intermediate case 76. In this example, the combination of first leg 184, second leg 186, fifth leg 196, and sixth leg 198 create a truss pattern/structure through which the load is more evenly distributed. In other examples, cross-beams (e.g., curved or straight) may extend between and connect the distal ends of first leg 184, second leg 186, fifth leg 196, and sixth leg 198 (and/or third leg 190 and the fourth leg). Support mount 180 with fifth and sixth legs 196 and 198 further distributes the force load from towershaft 68, through support mount 180, and into intermediate case 76 so as to provide additional strength to support mount 180.

FIG. 4B is a perspective view of support mount 280, not falling under the claimed subject matter, with first extension 282, body plate 284, and second extension 288. Here, first extension 282 and second extension 288 each include a panel of continuous solid material that is connected to and extends from body plate 284. In this non-limiting embodiment, first extension 282 includes a first flat sheet of material with a first curved edge that conforms to a first portion of a surface of intermediate case 76 (shown in FIG. 2). For example, the curved edge of first extension 282 matches a curved shaped of the surface of intermediate case 76 that first extension 282 attaches to. Also in this non-limiting embodiment, second extension 288 comprises a second flat sheet of material with a second curved edge that conforms to a second portion of the surface of intermediate case 76. Likewise, the curved edge of second extension 282 can match a curved shaped of the surface of intermediate case 76 that second extension 288 attaches to.

With first extension 282 and second extension 288 including a flat sheet of material, first extension 282 and second extension 288 can further distribute the load from towershaft 68 (shown in FIGS. 2-4A) over a greater area of intermediate case 76. Instead of transferring the load at specific points along intermediate case 76, first extension 282 and second extension 288 distribute the load through long arcs along the surface of intermediate case 76 which provides support mount 280 with a greater ability to transfer load from towershaft 68 to intermediate case 76.

## Claims

1. A bearing compartment assembly for a gas turbine engine (10) with a compressor section (20), a combustor section (22), and a turbine section (24), the bearing compartment assembly comprising:
an intermediate case (76) with a plurality of struts (78) distributed circumferentially about an axial centerline (12);
a towershaft (68) extending through a strut (78) of the plurality of struts (78);
a shaft (46, 48) passing through a center of the intermediate case (76) and extending along the axial centerline (12);
a bull gear (72) connected to and extending axially from the shaft (46, 48);
a bevel gear (74) mounted to an end of the towershaft (68), wherein the bevel gear (74) is engaged with the bull gear (72), wherein the towershaft (68) is connected to the shaft (46, 48) via the bull gear (72) and the bevel gear (74);
a towershaft bearing (96) surrounding and operably connected to the towershaft (68); and
a support mount (80; 180) connected to the intermediate case (76), wherein the support mount (80; 180)
extends from a surface of the intermediate case (76) to the towershaft bearing (96), the support mount (80; 180) comprising:
a body plate (94; 194) attached to an outer perimeter of the towershaft bearing (96);
a first extension (82) connected to and extending from the body plate (94; 194), wherein a distal end of the first extension (82) is connected to a first location on the surface of the intermediate case (76); and
a second extension (88) connected to and extending from the body plate (94, 194), wherein a distal end of the second extension (88) is connected to a second location on the surface of the intermediate case (76), wherein the first extension (82) comprises first and second legs (84, 86) that are fastened to the intermediate case (76), and wherein the second extension (88) comprises third and fourth legs (90, 92) that are fastened to the intermediate case (76);
wherein the first, second, third, and fourth legs (84, 86, 90, 92) intersect with a surface of intermediate case (76) such that first, second, third, and fourth legs (84, 86, 90, 92) are perpendicular to the surface of intermediate case (76).

2. The bearing compartment assembly of claim 1, wherein the first location of the intermediate case (76) is located radially outward from the second location relative to the axial centerline (12).

3. The bearing compartment assembly of claim 1 or 2, wherein the first location of the intermediate case (76) is disposed further away from the bull gear (72) than the second location of the intermediate case (76).

4. The bearing compartment assembly of claim 1, wherein at least one of the first, second, third, and fourth legs (84, 86, 90, 92) is circumferentially aligned with a strut (78) of the plurality of struts (78).

5. The bearing compartment assembly of any of claims 1 to 3, wherein at least one of the first extension and the second extension comprises a truss pattern.

6. The bearing compartment assembly of any preceding claim, wherein the compressor section (20) includes a low pressure compressor (20A) and a high pressure compressor (20B), further wherein the intermediate case (76) is disposed between the low pressure compressor (20A) and the high pressure compressor (20B).

7. A method of supporting a towershaft assembly of an engine (10) of an aircraft against an intermediate case (76) of the aircraft, the method comprising:
operating a gear assembly of the engine (10), wherein the gear assembly comprises:
a bull gear (72) operably connected to a shaft (46, 48) of the engine (10);
a bevel gear (74) mounted on an end of a towershaft (68) of the towershaft (68) assembly, the bevel gear (74) engaged with the bull gear (72), wherein the towershaft (68) assembly comprises:
the towershaft (68); and
a towershaft bearing (96) attached to the towershaft (68) such that the towershaft (68) passes through a middle of the towershaft bearing (96);
supporting the towershaft bearing (96) with a portion of a support mount (80; 180; 280), wherein the support mount (80; 180) comprises:
a body plate (94; 194) attached to an outer perimeter of the towershaft bearing (96);
a first extension (82) connected to and extending from the body plate (94, 194), wherein a distal end of the first extension (82) is connected to a first location on the surface of the intermediate case (76); and
a second extension (88) connected to and extending from the body plate (84, 184), wherein a distal end of the second extension (88; 288) is connected to a second location on the surface of the intermediate case (76); wherein the first extension (82) comprises first and second legs (84, 86) that are fastened to the intermediate case (76), and wherein the second extension (88) comprises third and fourth legs (90, 92) that are fastened to the intermediate case (76);
the first, second, third, and fourth legs (84, 86, 90, 92) intersect with a surface of intermediate case (76) such that first, second, third, and fourth legs (84, 86, 90, 92) are perpendicular to the surface of intermediate case (76); and
transferring a load from the bevel gear (74) to the towershaft (68), from the towershaft (68) to the towershaft bearing (96), from the towershaft bearing (96) to the support mount (80, 180), from the support mount (80, 180) to the intermediate case (76), and from the intermediate case (76) to a strut (78) of the intermediate case (76).

8. The method of claim 7, wherein transferring the load from the towershaft bearing (96) to the support mount (80; 180) comprises transferring the load from the towershaft bearing (96) to the body plate (94; 194), and from the body plate (94; 194) to at least one of the first and second extensions (82, 88).

9. The method of claim 7 or 8 further comprising loading the support mount (80; 180) compressively against the intermediate case (76) as the load is transferred from the towershaft (68) to the support mount (80; 180).

10. The method of any of claims 7 to 9, further comprising bracing, with the support mount (80; 180), the towershaft (68) against bending in an axial direction or in a tangential direction relative to an axial centerline (12) of the engine (10).

## Patentansprüche

1. Lagerraumbaugruppe für ein Gasturbinentriebwerk (10) mit einem Kompressorabschnitt (20), einem Brennkammerabschnitt (22) und einem Turbinenabschnitt (24), wobei die Lagerraumbaugruppe umfasst:
ein Zwischengehäuse (76) mit einer Vielzahl von Streben (78), die umfangsmäßig um eine axiale Mittellinie (12) verteilt ist;
eine Turmwelle (68), die sich durch eine Strebe (78) der Vielzahl von Streben (78) erstreckt;
eine Welle (46, 48), die durch eine Mitte des Zwischengehäuses (76) verläuft und sich entlang der axialen Mittellinie (12) erstreckt;
ein Zentralrad (72), das mit der Welle (46, 48) verbunden ist und sich axial von dieser erstreckt;
ein Kegelrad (74), das an einem Ende der Turmwelle (68) montiert ist, wobei das Kegelrad (74) mit dem Zentralrad (72) in Eingriff steht, wobei die Turmwelle (68) über das Zentralrad (72) und das Kegelrad (74) mit der Welle (46, 48) verbunden ist;
ein Turmwellenlager (96), das die Turmwelle (68) umgibt und damit wirkverbunden ist; und
eine Trägerhalterung (80; 180), die mit dem Zwischengehäuse (76) verbunden ist, wobei sich die Trägerhalterung (80; 180) von einer Fläche des Zwischengehäuses (76) zu dem Turmwellenlager (96) erstreckt, wobei die Trägerhalterung (80; 180) umfasst:
eine Körperplatte (94; 194), die an einem Außenumfang des Turmwellenlagers (96) angebracht ist;
eine erste Verlängerung (82), die mit der Körperplatte (94; 194) verbunden ist und sich von dieser erstreckt, wobei ein distales Ende der ersten Verlängerung (82) mit einer ersten Stelle auf der Fläche des Zwischengehäuses (76) verbunden ist; und
eine zweite Verlängerung (88), die mit der Körperplatte (94, 194) verbunden ist und sich von dieser erstreckt, wobei ein distales Ende der zweiten Verlängerung (88) mit einer zweiten Stelle auf der Fläche des Zwischengehäuses (76) verbunden ist, wobei die erste Verlängerung (82) einen ersten und einen zweiten Schenkel (84, 86) umfasst, die an dem Zwischengehäuse (76) befestigt sind, und wobei die zweite Verlängerung (88) einen dritten und einen vierten Schenkel (90, 92) umfasst, die an dem Zwischengehäuse (76) befestigt sind;
wobei der erste, der zweite, der dritte und der vierte Schenkel (84, 86, 90, 92) eine Fläche des Zwischengehäuses (76) derart schneiden, dass der erste, der zweite, der dritte und der vierte Schenkel (84, 86, 90, 92) senkrecht zu der Fläche des Zwischengehäuses (76) stehen.

2. Lagerraumbaugruppe nach Anspruch 1, wobei die erste Stelle des Zwischengehäuses (76) relativ zu der axialen Mittellinie (12) radial auswärts von der zweiten Stelle liegt.

3. Lagerraumbaugruppe nach Anspruch 1 oder 2, wobei die erste Stelle des Zwischengehäuses (76) weiter von dem Zentralrad (72) entfernt angeordnet ist als die zweite Stelle des Zwischengehäuses (76).

4. Lagerraumbaugruppe nach Anspruch 1, wobei mindestens einer von dem ersten, zweiten, dritten und vierten Schenkel (84, 86, 90, 92) in Umfangsrichtung an einer Strebe (78) der Vielzahl von Streben (78) ausgerichtet ist.

5. Lagerraumbaugruppe nach einem der Ansprüche 1 bis 3, wobei die erste Verlängerung und/oder die zweite Verlängerung ein Fachwerkmuster umfasst.

6. Lagerraumbaugruppe nach einem der vorhergehenden Ansprüche, wobei der Kompressorabschnitt (20) einen Niederdruckkompressor (20A) und einen Hochdruckkompressor (20B) umfasst, wobei ferner das Zwischengehäuse (76) zwischen dem Niederdruckkompressor (20A) und dem Hochdruckkompressor (20B) angeordnet ist.

7. Verfahren zum Tragen einer Turmwellenbaugruppe eines Triebwerks (10) eines Luftfahrzeugs an einem Zwischengehäuse (76) des Luftfahrzeugs, wobei das Verfahren umfasst:
Betreiben einer Getriebebaugruppe des Triebwerks (10), wobei die Getriebebaugruppe umfasst:
ein Zentralrad (72), das mit einer Welle (46, 48) des Triebwerks (10) wirkverbunden ist;
ein Kegelrad (74), das an einem Ende einer Turmwelle (68) der Turmwellenbaugruppe (68) montiert ist, wobei das Kegelrad (74) mit dem Zentralrad (72) in Eingriff steht, wobei die Turmwellenbaugruppe (68) umfasst:
die Turmwelle (68); und
ein Turmwellenlager (96), das derart an der Turmwelle (68) angebracht ist, dass die Turmwelle (68) durch eine Mitte des Turmwellenlagers (96) verläuft;
Tragen des Turmwellenlagers (96) mit einem Abschnitt einer Trägerhalterung (80; 180; 280), wobei die Trägerhalterung (80; 180) umfasst:
eine Körperplatte (94; 194), die an einem Außenumfang des Turmwellenlagers (96) angebracht ist;
eine erste Verlängerung (82), die mit der Körperplatte (94, 194) verbunden ist und sich von dieser erstreckt, wobei ein distales Ende der ersten Verlängerung (82) mit einer ersten Stelle auf der Fläche des Zwischengehäuses (76) verbunden ist; und
eine zweite Verlängerung (88), die mit der Körperplatte (84, 184) verbunden ist und sich von dieser erstreckt, wobei ein distales Ende der zweiten Verlängerung (88; 288) mit einer zweiten Stelle auf der Fläche des Zwischengehäuses (76) verbunden ist; wobei die erste Verlängerung (82) einen ersten und einen zweiten Schenkel (84, 86) umfasst, die an dem Zwischengehäuse (76) befestigt sind, und wobei die zweite Verlängerung (88) einen dritten und einen vierten Schenkel (90, 92) umfasst, die an dem Zwischengehäuse (76) befestigt sind;
wobei der erste, der zweite, der dritte und der vierte Schenkel (84, 86, 90, 92) eine Fläche des Zwischengehäuses (76) derart schneiden, dass der erste, der zweite, der dritte und der vierte Schenkel (84, 86, 90, 92) senkrecht zu der Fläche des Zwischengehäuses (76) stehen;
und
Übertragen einer Last von dem Kegelrad (74) auf die Turmwelle (68), von der Turmwelle (68) auf das Turmwellenlager (96), von dem Turmwellenlager (96) auf die Trägerhalterung (80, 180), von der Trägerhalterung (80, 180) auf das Zwischengehäuse (76) und von dem Zwischengehäuse (76) auf eine Strebe (78) des Zwischengehäuses (76).

8. Verfahren nach Anspruch 7, wobei das Übertragen der Last von dem Turmwellenlager (96) auf die Trägerhalterung (80; 180) das Übertragen der Last von dem Turmwellenlager (96) auf die Körperplatte (94; 194) und von der Körperplatte (94; 194) auf mindestens eine von der ersten und der zweiten Verlängerung (82, 88) umfasst.

9. Verfahren nach Anspruch 7 oder 8, ferner umfassend Belasten der Trägerhalterung (80; 180) mit Druck gegen das Zwischengehäuse (76), wenn die Last von der Turmwelle (68) auf die Trägerhalterung (80; 180) übertragen wird.

10. Verfahren nach einem der Ansprüche 7 bis 9, ferner umfassend Sichern der Turmwelle (68) mit der Trägerhalterung (80; 180) gegen Biegung in einer axialen Richtung oder in einer tangentialen Richtung relativ zu einer axialen Mittellinie (12) des Triebwerks (10).

## Revendications

1. Ensemble de compartiment de palier pour un moteur à turbine à gaz (10) avec une section de compresseur (20), une section de chambre de combustion (22) et une section de turbine (24), l'ensemble de compartiment de palier comprenant :
un carter intermédiaire (76) avec une pluralité d'entretoises (78) réparties circonférentiellement autour d'un axe central (12) ;
un arbre de tour (68) s'étendant à travers une entretoise (78) de la pluralité d'entretoises (78) ;
un arbre (46, 48) passant par un centre du carter intermédiaire (76) et s'étendant le long de l'axe central axial (12) ;
un engrenage denté (72) raccordé à l'arbre (46, 48) et s'étendant axialement à partir de celui-ci ;
un engrenage conique (74) monté sur une extrémité de l'arbre de tour (68), dans lequel l'engrenage conique (74) est en prise avec l'engrenage denté (72), dans lequel l'arbre de tour (68) est raccordé à l'arbre (46, 48) par l'intermédiaire de l'engrenage denté (72) et de l'engrenage conique (74) ;
un palier d'arbre de tour (96) entourant et raccordé de manière fonctionnelle à l'arbre de tour (68) ; et
une monture de support (80 ; 180) raccordé au carter intermédiaire (76), dans lequel la monture de support (80 ; 180) s'étend depuis une surface du carter intermédiaire (76) jusqu'au palier d'arbre de tour (96), la monture de support (80 ; 180) comprenant :
une plaque de corps (94 ; 194) fixée à un périmètre extérieur du palier d'arbre de tour (96) ;
une première extension (82) raccordée à et s'étendant depuis la plaque de corps (94 ; 194), dans lequel une extrémité distale de la première extension (82) est raccordée à un premier emplacement sur la surface du carter intermédiaire (76) ; et une seconde extension (88) raccordée à et s'étendant depuis la plaque de corps (94, 194), dans lequel une extrémité distale de la seconde extension (88) est raccordée à un second emplacement sur la surface du carter intermédiaire (76), dans lequel la première extension (82) comprend des première et deuxième pattes (84, 86) qui sont fixées au carter intermédiaire (76), et dans lequel la seconde extension (88) comprend des troisième et quatrième pattes (90, 92) qui sont fixées au carter intermédiaire (76) ;
dans lequel les première, deuxième, troisième et quatrième pattes (84, 86, 90, 92) croisent une surface du carter intermédiaire (76) de sorte que les première, deuxième, troisième et quatrième pattes (84, 86, 90, 92) sont perpendiculaires à la surface du carter intermédiaire (76).

2. Ensemble de compartiment de palier selon la revendication 1, dans lequel le premier emplacement du carter intermédiaire (76) est situé radialement vers l'extérieur depuis le second emplacement par rapport à l'axe central (12).

3. Ensemble de compartiment de palier selon la revendication 1 ou 2, dans lequel le premier emplacement du carter intermédiaire (76) est disposé plus loin de l'engrenage denté (72) que le second emplacement du carter intermédiaire (76).

4. Ensemble de compartiment de palier selon la revendication 1, dans lequel au moins l'une des première, deuxième, troisième et quatrième pattes (84, 86, 90, 92) est alignée circonférentiellement avec une entretoise (78) de la pluralité d'entretoises (78).

5. Ensemble de compartiment de palier selon l'une quelconque des revendications 1 à 3, dans lequel au moins l'une de la première extension et de la seconde extension comprend un motif en treillis.

6. Ensemble de compartiment de palier selon une quelconque revendication précédente, dans lequel la section de compresseur (20) comporte un compresseur basse pression (20A) et un compresseur haute pression (20B), dans lequel en outre le carter intermédiaire (76) est disposé entre le compresseur basse pression (20A) et le compresseur haute pression (20B).

7. Procédé de support d'un ensemble arbre de tour d'un moteur (10) d'un aéronef contre un carter intermédiaire (76) de l'aéronef, le procédé comprenant :
le fonctionnement d'un ensemble d'engrenages du moteur (10), dans lequel l'ensemble d'engrenages comprend :
un engrenage denté (72) raccordé fonctionnellement à un arbre (46, 48) du moteur (10) ;
un engrenage conique (74) monté sur une extrémité d'un arbre de tour (68) de l'ensemble arbre de tour (68), l'engrenage conique (74) étant en prise avec l'engrenage denté (72), dans lequel l'ensemble arbre de tour (68) comprend :
l'arbre de tour (68) ; et
un palier d'arbre de tour (96) fixé à l'arbre de tour (68) de sorte que l'arbre de tour (68) traverse un milieu du palier d'arbre de tour (96) ;
le support du palier d'arbre de tour (96) avec une partie d'une monture de support (80 ; 180 ; 280), dans lequel la monture de support (80 ; 180) comprend :
une plaque de corps (94 ; 194) fixée à un périmètre extérieur du palier d'arbre de tour (96) ;
une première extension (82) raccordée à et s'étendant depuis la plaque de corps (94, 194), dans lequel une extrémité distale de la première extension (82) est raccordée à un premier emplacement sur la surface du carter intermédiaire (76) ; et
une seconde extension (88) raccordée à et s'étendant depuis la plaque de corps (84, 184), dans lequel une extrémité distale de la seconde extension (88 ; 288) est raccordée à un second emplacement sur la surface du carter intermédiaire (76) ; dans lequel la première extension (82) comprend des première et deuxième pattes (84, 86) qui sont fixées au carter intermédiaire (76), et dans lequel la seconde extension (88) comprend des troisième et quatrième pattes (90, 92) qui sont fixées au carter intermédiaire (76) ;
les première, deuxième, troisième et quatrième pattes (84, 86, 90, 92) croisent une surface du carter intermédiaire (76) de sorte que les première, deuxième, troisième et quatrième pattes (84, 86, 90, 92) sont perpendiculaires à la surface du carter intermédiaire (76) ;
et
le transfert d'une charge de l'engrenage conique (74) à l'arbre de tour (68), de l'arbre de tour (68) au palier d'arbre de tour (96), du palier d'arbre de tour (96) à la monture de support (80, 180), de la monture de support (80, 180) au carter intermédiaire (76), et du carter intermédiaire (76) à une entretoise (78) du carter intermédiaire (76).

8. Procédé selon la revendication 7, dans lequel le transfert de la charge du palier d'arbre de tour (96) au montage de support (80 ; 180) comprend le transfert de la charge du palier d'arbre de tour (96) à la plaque de corps (94 ; 194), et de la plaque de corps (94 ; 194) à au moins l'une des première et seconde extensions (82, 88).

9. Procédé selon la revendication 7 ou 8, comprenant en outre le chargement de la monture de support (80 ; 180) en compression contre le carter intermédiaire (76) lorsque la charge est transférée de l'arbre de tour (68) à la monture de support (80 ; 180) .

10. Procédé selon l'une quelconque des revendications 7 à 9, comprenant en outre le renforcement, avec la monture de support (80 ; 180), de l'arbre de tour (68) contre la flexion dans une direction axiale ou dans une direction tangentielle par rapport à un axe central (12) du moteur (10).
